# EUROPEAN PATENT SPECIFICATION

(11) **EP 1 560 113 B1**
(45) Date of publication and mention of the grant of the patent: **20.09.2006**
(21) Application number: 04250530.5
(22) Date of filing: 30.01.2004
(51) Int. Cl.: G06F 9/445

(54) **Method of booting a computer from any card of a multi-flash card reader**
Verfahren um einen Computer von einer beliebigen Karte eines Lesegeräts für mehrfache Speicherkarten zu booten
Procédé d'initialisation d'un ordinateur en utilisant une carte quelconque d'un multi-lecteur de cartes à mémoire

(43) Date of publication of application: 03.08.2005
(73) Proprietor: Integrated Circuit Solution Inc, Shin-Chu, Taiwan (CN)
(72) Inventor: Tseng, Tsung-Yi, Ping Tung Hsien Taiwan (TW); Wang, Brandon, Taiwan (TW); Chen, Ryan, Hsi Chou Hsiang, Chang Hua Hsien Taiwan (TW)
(74) Representative: Garratt, Peter Douglas

(56) References cited:
- EP-A- 0 489 227
- US-A1- 2003 145 191
- US-B1- 6 446 203

## Description

### BACKGROUND OF THE INVENTION

### 1. Field of the Invention

The present invention relates to a method of booting a computer by a flash card in multi-card reader/writer, and more particularly to a method of dynamical detecting a bootable card in multi-card reader/writer with an USB (Universal Serial Bus) interface from any one of flash card if it contains a bootable pattern.

### 2. Description of the Prior Art

With the progressive of the semiconductor technologies, nowadays, high capacity flash memories are much cheaper than ever before. Among products of storage media, the flash memory cards may be the most pocket, miniature and a big hit with public. Furthermore, as a probable storage media, vibration problems often occur in the hard disk whereas it does not found in the flash memory cards. Therefore, the flash memory cards are often selected as one of the best candidates for MP3 player, personal digital assistor, and digital still camera. The user can store the data retrieved at outdoor, and then he or she plugs the memory card into an USB card reader and transfers the data thereof into a hard disk. The flash memory card can then be reused just by refreshing or formatting the memory or just deleting part of files.

However, owing to main manufacturer do not formulate a universal format for flash cards, thus a variety of flash card types or formats are popular in the memory market currently. The card formats include compact flash card (CF) type I/II, memory stick (MS), multimedia card (MMC), secure digital card (SD), smart media card (SMC) in the markets. Subsequently, there are many kinds of card readers, such as 3 in 1, 4 in 1, or 6 in 1.

Since the popularity of the USB device, almost all of personal computers or hand-held computers activated currently BIOS (basic input output system) thereof supporting the computers booting from those USB devices such as USB -ZIP, USB-HDD, USB-FDD or USB card reader or said card reader/writer. Whereas only the flash card located at the first socket is available to boot a computer for current BIOS if a multi-socket flash card reader is desired to boot by BIOS setting. Hence, even though the 6 in 1 or 4in 1 of USB flash card reader is convenient for user to solve the problems due to non-universal type, however, only a flash card type compliant with the first socket is available for booting. The user thus can only make the flash card have a booting pattern in booting sector if he or she wants to the computer booting from the USB card reader. Therefore, it is not inconvenient for most of users since then he or she must note the flash card type while buying flash card reader and the type of his or her favorite electronic merchandise supported.

Consequently, an object of the present invention is to provide a method to solve the forgoing problem by means of dynamic detecting the sockets of the USB flash card reader. The firmware of the USB flash card reader can make up the deficiency of the BIOS of the host. While the BIOS inquires a bootable pattern from the USB flash card reader, the firmware of the USB flash card reader can respond to the host no matter which sockets a flash card is located. Because in accordance with the present invention, the firmware will automatically detect the bootable pattern from each of flash cards which are plugged in the sockets

### SUMMARY OF THE INVENTION

A main object of the present invention is to provide a method to make a computer bootable from a flash card of USB flash card reader. The flash card does not need to be compliant with the type of the first socket but can be others..
The present invention discloses a method of making a computer booting an operation system from a flash card which is plugged in a multi-card reader. The multi-card reader does not care the card is located at first socket or not. The method comprises: at first, a bootable card having a master bootable record or reserve sector written a bootable pattern thereon is prepared. Then if the BIOS of the host computer requests a bootable pattern from the USB storage apparatus, the firmware of the multi-card reader is then provided a logic unit number(LUN) =0 to the host computer if there is a bootable flash card seated at a socket. The socket does not need to be the first socket but can be arbitrary. Thus, the USB card reader will be convenient for any user.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein:

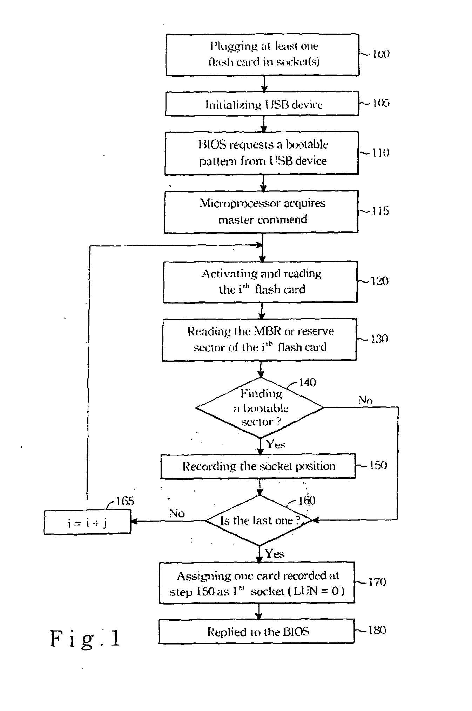

FIG. 1 shows a flow chart of making a computer bootable from a flash card of USB flash card reader according to the present invention.

### DESCRIPTION OF THE PREFERRED EMBODIMENT

As described in the background of the invention, whether a flash card having a bootable pattern provided a function for a computer to boot an operation system from an USB flash card reader is mainly determined by the facts that the first flash card is compliant with the type of the first socket of the flash card reader. A user has to take care the flash card type if it is compliant with the type that the first socket supported. Otherwise, the flash card destined to be unbootable even though it contains bootable pattern. The present invention is to overcome such dilemma. According to the preferred embodiment of the present invention, any one of the flash cards compliant with the formats of sockets of the USB flash card reader can provide a booting function if it contains a bootable pattern in the master boot section. The detail descriptions are as follows:

According, an application is provided to format a flash card desired and write a bootable pattern into reserve bytes or reserve sector of the master boot sector (hereinafter called MBR). The second, a firmware is provided which is to detect if a bootable pattern presented at MBR or not while the MBR of one or more flash cards plugged in the sockets of the flash card reader is sequentially read out. If it does, the firmware will give the logic unit 0 to the detected flash card no matter the socket position number it plugged. Therefore, it seems the flash card is plugged in first socket even though it is not true while viewing from BIOS.

Referring to FIG. 1, it shows a flow chart in accordance with the present invention. As is shown in step 100, the step is to make the flash card reader connected with the host. A desired flash card is inserted into a socket of the flash card reader, or something the like,

Thereafter, the step 105 is to make a fresh card bootable. When a computer is turned on, the central processor unit (CPU) fetches the BIOS code from the south bridge chip and north bridge chip or from the BIOS CMOS chip. The CPU then tests and detects the peripheral devices, activates the AGP(Advanced Graphics Port) display adaptor card, activates the DRAM and other peripheral devices, such as PCI devices, floppy driver, hard disk driver, CDROM, CDRWM, DVDROM, mouse, and keyboard. Some of the mouse, keyboard are connected through PS2 socket, or USB port. The host then sends standard requests such as "Get Descriptor" and "Set Configure" to process the initialization.

Afterward, as shown in step 110, for booting the operation system, the BIOS requests a bootable pattern from I/O devices when the parameters of the BIOS is set up booting from the USB device. The I/O devices may be a floppy driver, a hard disk driver, or a CDROM. Then the step 115 followed. The firmware of the USB card reader and the microprocessor together acquire the master command.

Subsequently, as shown in step 120, the microprocessor executes the programming code of the firmware to activate and read a first flash card. The flash card seated does not limit to be at first socket number. For example It can be the number "i" where i is an integer. Thereafter, the contents of the MBR or the reserve sector of the flash cards are read out to find a bootable pattern, please see step 130. A decision step 140 is then taken to find if the flash card owned a bootable pattern. If the flash card indeed has a bootable pattern, the corresponding socket position is then recorded, as is shown in step 150 and the step 160 is followed. If the flash card does not own a bootable pattern, the step 150 is skipped and directly skip to step 160.

Please see step 160, the decision step is to determine whether the flash card is the last flash card or not. If it doesn't, the step 160 is followed. That is a next flash card i= i+j (see step 165) is processed and return to the step 120, where "j" is an integral by socked number. And then repeatedly takes the steps 120 through 150. All of the master boot sectors of the flash cards are read sequentially until the last flash card i=f is finished, where f is the last flash card number.

After the microprocessor finished the last flash card, the step 170 is followed. The record of the step 150 may have recorded zero, one or more flash cards own a bootable pattern. In the case at least one flash card has a bootable, a logic unit 0 is then assigned to any one of them (See step 170), replied to BIOS and handed over the command to the operation system (please see step 180).

As is understood by a person skilled in the art, the foregoing preferred embodiments of the present invention are illustrated of the present invention rather than limiting of the present invention. It is intended to cover various modifications and similar arrangements included within the scope of the appended claims.

## Claims

1. A method of booting an operating system for a computer from a flash card plugged in any socket of an USB card reader, and said method comprises the steps of:
providing an USB card reader, said USB card reader having a firmware, said firmware being used to determine if a flash card plugged in one of sockets of said USB card reader having a bootable pattern;
providing a flash card compliant with one of formats of said USB readers; said flash card having a bootable pattern in a master boot sector or reserve sector;
providing a host connected with said USB card reader, said host having a BIOS supporting said USB card reader booting therefrom and said flash card being plugged in one of said sockets; and
replying a logic unit number 0 from said firmware of said USB card reader to said host when said host desires booting an operation system from said flash card.

2. The method of claim 1 when said host requests a bootable pattern from said USB readers, said host handing over a master command to said firmware and a microprocessor of said USB readers.

3. The method of claim 1 wherein said USB readers at least supports two types selected from the group consisting of compact flash card (CF) type I/II, memory stick (MS), multimedia card (MMC), secure digital card (SD), smart media card (SMC).

## Patentansprüche

1. Verfahren zum Booten eines Betriebssystems für einen Computer von einer Flash Card, die in einen beliebigen Sockel eines USB-Kartenlesers gesteckt ist, wobei das Verfahren die folgenden Schritte umfasst:
Bereitstellen eines USB-Kartenlesers, wobei der USB-Kartenleser eine Firmware aufweist, wobei die Firmware verwendet wird, um zu bestimmen, ob eine in einen der Sockel des USB-Kartenlesers gesteckte Flash Card ein bootfähiges Muster aufweist;
Bereitstellen einer Flash Card, die mit einem der Formate des USB-Lesers konform ist, wobei die Flash Card ein bootfähiges Muster in einem Haupt-Boot-Sektor oder einem Reserve-Sektor aufweist;
Bereitstellen eines Hosts, der mit dem USB-Kartenleser verbunden ist, wobei der Host ein BIOS aufweist, das den USB-Kartenleser unterstützt, der davon bootet und von der Flash Card, die in einen der Sockel eingesteckt ist; und
Übertragen einer logischen Einheits-Zahl 0 von der Firmware des USB-Kartenlesers an den Host, wenn der Host ein Betriebssystem von der Flash Card booten möchte.

2. Verfahren nach Anspruch 1, wobei, wenn der Host ein bootfähiges Muster von den USB-Lesern anfordert, der Host einen Master-Befehl an die Firmware und an einen Mikroprozessor der USB-Leser übermittelt.

3. Verfahren nach Anspruch 1, wobei die USB-Leser wenigstens zwei Arten ausgewählt aus der Gruppe bestehend aus Compact Flash Card (CF) Typ I/II, Memory Stick (MS), Multimedia Card (MMC), Secure Digital Card (SD), Smart Media Card (SMC) unterstützen.

## Revendications

1. Procédé pour initialiser un système d'exploitation pour ordinateur, à partir d'une carte de mémoire flash, enfichée sur un support quelconque d'un lecteur de carte USB, ledit procédé comprenant les étapes consistant à :
prévoir un lecteur de carte USB, ledit lecteur de carte USB comportant un micrologiciel, ledit micrologiciel étant utilisé pour déterminer si une carte de mémoire flash, enfichée sur l'un des supports dudit lecteur de carte USB a une configuration d'initialisation ;
prévoir une carte de mémoire flash conforme à l'un des formats desdits lecteurs USB ; ladite carte de mémoire flash ayant une configuration d'initialisation dans un secteur d'amorçage maître ou secteur de réserve ;
prévoir un hôte connecté audit lecteur de carte USB, ledit hôte ayant un BIOS prenant en charge ledit lecteur de carte USB s'initialisant à partir de celui-ci et ladite carte de mémoire flash étant enfichée sur l'un desdits supports ; et
délivrer en réponse un numéro d'unité logique 0 à partir dudit micrologiciel dudit lecteur de carte USB, audit hôte, lorsque ledit hôte souhaite initialiser un système d'exploitation à partir de ladite carte de mémoire flash.

2. Procédé selon la revendication 1, dans lequel ledit hôte demande une configuration d'initialisation auxdits lecteurs USB, ledit hôte transmettant une instruction maîtresse audit micrologiciel et à un microprocesseur desdits lecteurs USB.

3. Procédé selon la revendication 1, dans lequel lesdits lecteurs USB prennent en charge au moins deux types sélectionnés parmi le groupe composé de la carte flash compacte (CF) de type I/II, du bâtonnet de mémoire (MS), de la carte multimédia (MMC), de la carte numérique sécurisée (SD) et de la carte média intelligente (SMC).
